# EUROPEAN PATENT SPECIFICATION

(11) **EP 1 776 898 B1**
(45) Date of publication and mention of the grant of the patent: **17.11.2010**
(21) Application number: 06022646.1
(22) Date of filing: 29.03.2000
(51) Int. Cl.: A47B 77/02, A47J 47/00, A47J 47/20, E03C 1/18, F24C 15/30

(54) **Sink and cutting board member combination**
Küchenspüle und Schneidebrett Kombination
Evier et planche à découper en combinaison

(30) Priority: 30.03.1999 US 126795 P
(43) Date of publication of application: 25.04.2007
(62) Divisional of application: 00921497.4
(73) Proprietor: KOHLER CO., Kohler, WI 53044 (US)
(72) Inventor: Reid, Mary J., Sheboygan WI 53081 (US); Mueller, Carl F., Sheboygan Falls WI 53085 (US); Johansen, Mark, Kohler WI 53044 (US); O'Connell, David J., Sheboygan Falls WI 53083 (US); Quella, John F., Sturgeon Bay, Wisconsin 54235-9585 (US)
(74) Representative: Ebner von Eschenbach, Jennifer

(56) References cited:
- EP-A- 0 387 648
- CA-A1- 1 150 906
- DE-A1- 3 621 151
- US-A- 3 126 552

## Description

The present invention relates to sinks.

It is known in the art to have a conventional kitchen basin and at least one other basin which is designed to receive an insert such as a colander. For example, U. S. patent 4,456,021 discloses a sink with a colander and a sliding cutting board. Also DE 3621151 A discloses a sink with a sliding cutting board.

Although the prior art teaches various types of sinks with basins and cooking capabilities, there is not available a kitchen sink with a cooking chamber wherein the controls are conveniently and compactly positioned. In addition, the prior art does not afford slidable movement of a cutting board on such a sink.

### BRIEF SUMMARY OF THE INVENTION

The present invention provides a sink and a cutting board member combination according to claim 1. In particular, the cutting board member should be slidable on the sink in a side-to-side or front-to-back manner.

The object of the invention is to provide a sink wherein the sink affords the basin affords slidable support for a cutting board member in a flexible and user-friendly way.

### BRIEF DESCRIPTION OF THE DRAWINGS

Fig. 1 is a top perspective view of the combined sink and cooking unit;
Fig. 2 is a view similar to Fig. 1 showing a different cooking utensil;
Fig. 3 is a side elevational view taken along line 3-3 of Fig. 1;
Fig. 4 is a sectional view taken along line 4-4 of Fig. 1;
Fig. 5 is a sectional view taken along line 5-5 of Fig. 4;
Fig. 6 is an enlarged view taken along line 6-6 of Fig. 5;
Fig. 7 is a top perspective view of the combined sink and cooking unit illustrating a cutting board and wire basket for use with the basin;
Fig. 8 is a sectional view taken along line 8-8 of Fig. 7;
Fig. 9 is a view similar to Fig. 7 illustrating a different direction of movement of the cutting board;
Fig. 10 is a sectional view taken along line 10-10 of Fig. 9;
Fig. 11 is a top perspective view of an alternative cooking unit;
Fig. 12 is a sectional view taken along line 12-12 of Fig. 11; and
Fig. 13 is an enlarged view taken along line 13-13 of Fig. 12.

### DETAILED DESCRIPTION OF THE INVENTION

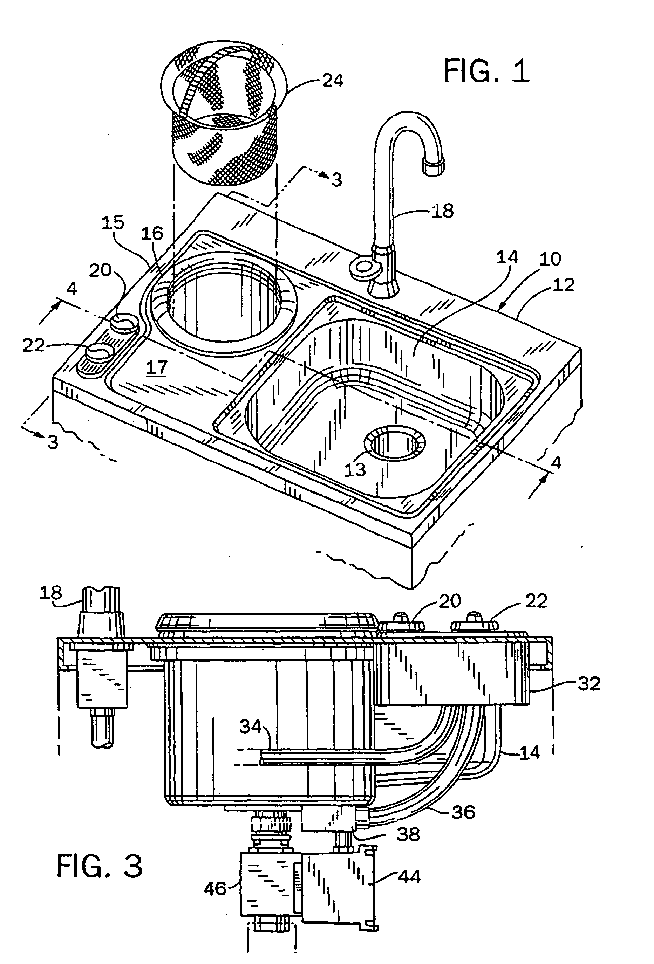

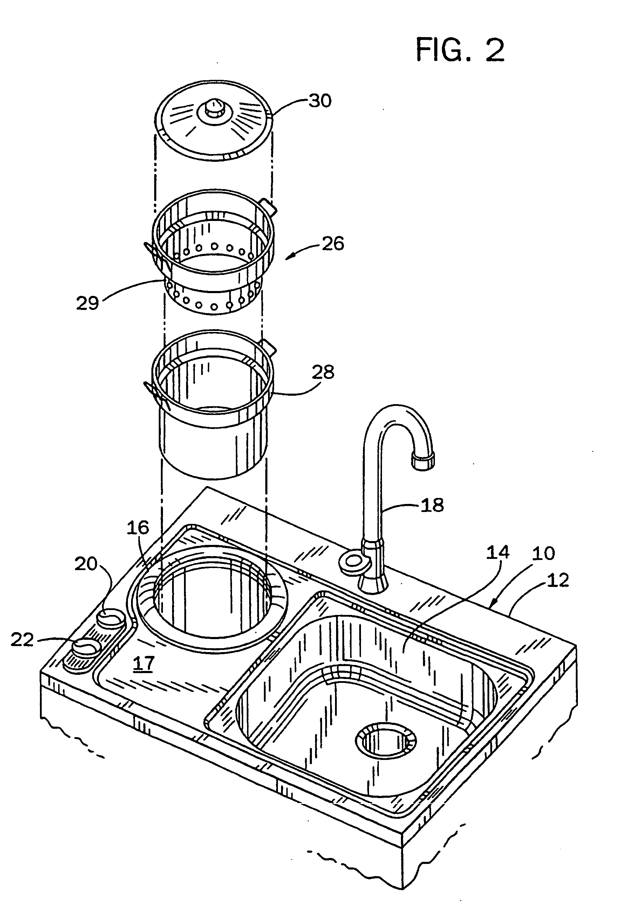

Referring to Figs. 1-3, there is shown the combined sink and cooking unit, generally 10. It includes a sink 12 with a supporting top 15 in which are placed a basin 14 with a drain outlet 13 and a cooking chamber 16. The supporting top 15 has a recessed portion 17. A faucet 18 is provided to supply water to both the basin 14 and the cooking chamber 16. The cooking chamber 16 is designed to receive various types of cooking utensils, such as the wire basket 24 shown in Fig. 1 and the steamer 26 shown in Fig. 2 with the double boiler 28, the pasta colander 29, and the lid 30.

Placed adjacent to the cooking chamber 16 are the control knobs 20 and 22 for controlling electrical current for heating the cooking chamber, as well as opening and closing a drain thereto. This is seen in conjunction with Figs. 3, 4 and 5. Electrical current is supplied by line 34 which is connected to control box 32. Current from this line will be regulated in the usual manner by switches housed in control box 32 and connected to control knobs 20 and 22. Line 36 is connected to junction box 38 and supplies controlled current to both the heating element 42 and the drain control 44 which controls a drain valve 46.

A housing 40 is provided over heating elements 42. Drain control 44 activates solenoid operated drain valve 46 for draining water from drain 48 and ultimately from the cooking pot 50 of the cooking chamber 16.

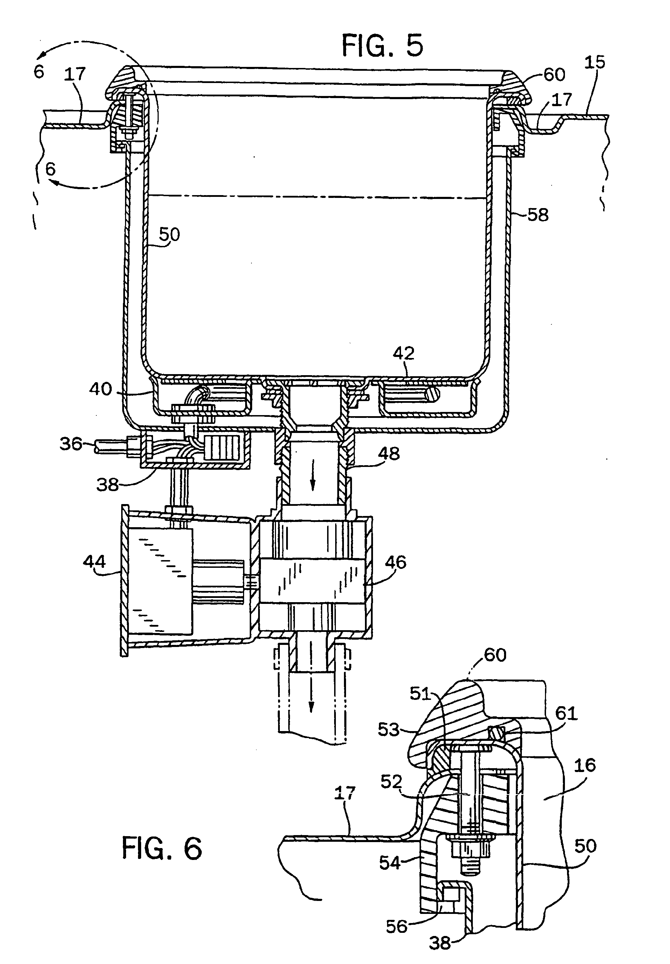

Fig. 6 illustrates the attachment of the cooking chamber 16 with pot 50 to the support top 17. A bolt 52 connected at its head to the shoulder 51 of the pot 50 is fastened to the connector 54 with the seal 53 placed between the shoulder 51 and the support top 17. Connector 54 has a support section 56 to which is connected an outer housing 58 for the cooking chamber. At the top of the cooking chamber is an insulating ring 60, the purpose of which is to prevent accidental contact with the top of the cooking pot which can be very hot. A seal 61 is disposed between the insulating ring 60 and the shoulder 51. Vents (not shown) are provided in the ring 60 to permit steam to escape when the chamber 16 is covered. They are preferably positioned at the back of the ring opposite the operator.

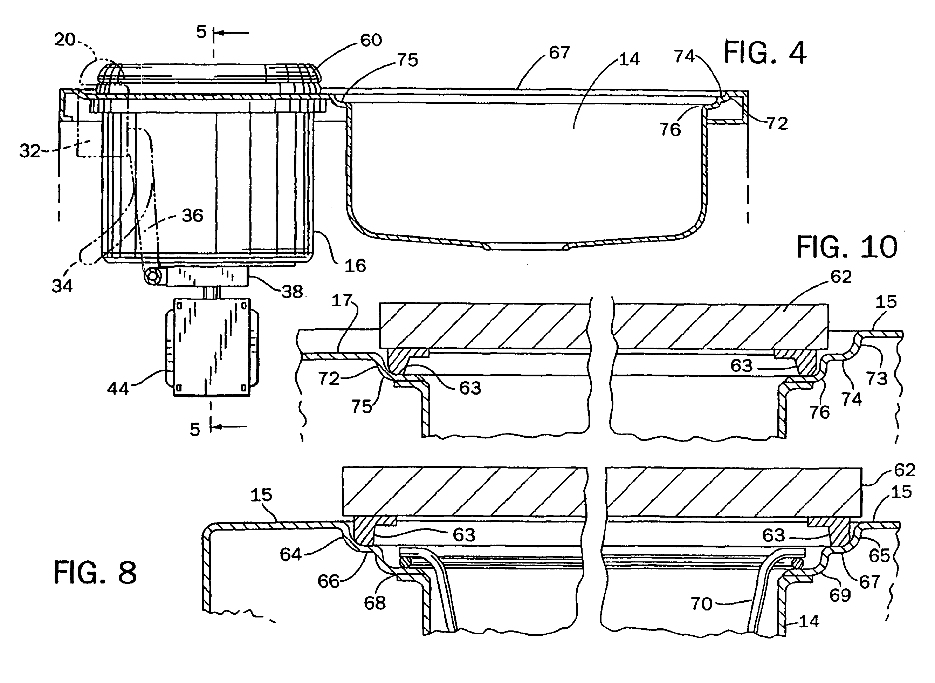

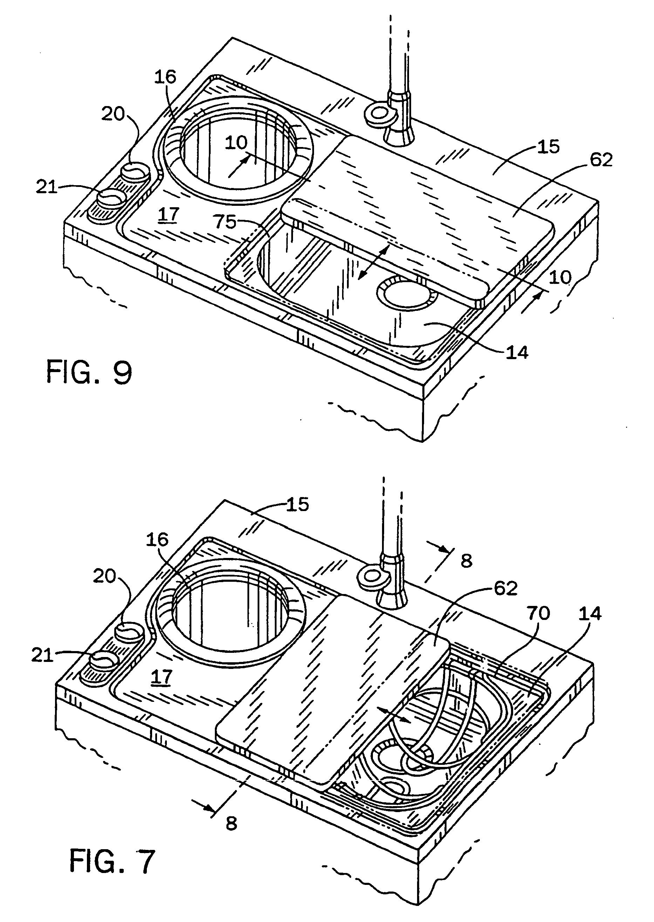

Referring to Figs. 7-10, there is shown a cutting board 62 for movement in either a side-to-side manner or front-to-back manner with respect to basin 14. As seen in Fig. 8, support top 15 includes a front wall 64 and a back wall 65 with supporting surfaces provided by upper tracks or rails 66 and 67, as well as lower rails 68 and 69. Placed in upper rails 66 and 67 are the support feet 63 of cutting board 62. This affords side-to-side slidable movement in these rails and over the wire basket 70 which is supported in the lower rails 68 and 69. If it is desired to have a front-to-back movement of the cutting board rather than a side-to-side movement, this is accomplished by removing the wire basket 70, turning the cutting board 62 90° with placement in the lower supporting surfaces provided by rails 75 and 76 which are provided in the side walls 72 and 73. This is shown in Fig. 10. It should be noted that side wall 73 also provides for an upper rail 74 which is coplanar with recessed surface 17. In effect, upper rails 66, 67 and 74 form a supporting surface or track with the recessed surface 17.

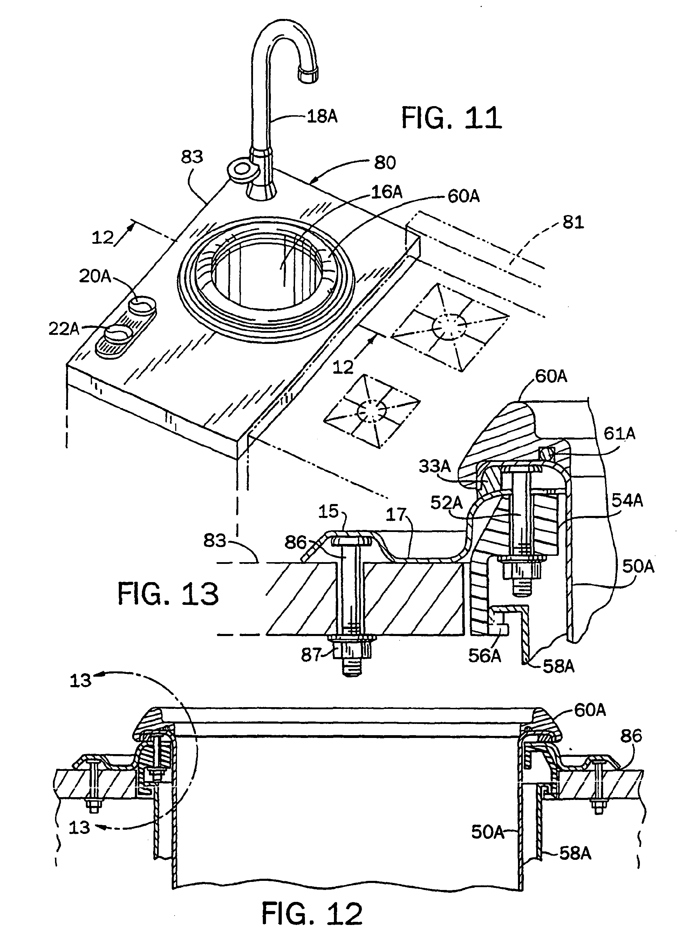

Referring to Figs. 11-13, there is shown an alternative cooking unit, generally 80, without the basin and sink but in conjunction with a cooking range 81. This cooking unit includes all of the components previously described for cooking chamber 16 with similar components designated with the same numbers except followed by the suffix "A". The connection of the cooking chamber to a support is similar to that as previously described with the cooking chamber 16 except that the connection to the recessed surface 17 of the support top 15 includes an additional bolt 86 and nut 87 for connection through the counter top 83. The heating of water in the cooking chamber 16 as controlled by the control knob 20A, as well as the draining of water therefrom by means of the control knob 22A, is as previously described in conjunction with controls knobs 20 and 22.

An important feature of the combined sink and cooking unit 10, as well as that of unit 80, is seen from the fact that the control of heat and drainage is made convenient by the positioning of the control knobs such as 20 and 22 immediately adjacent to the cooking chamber. With the faucet 18 being placed adjacent thereto, the cooking chamber can be filled with water, heated and drained therefrom without having to remove the cooking utensil and the food prepared therein from the cooking pot until it is cooked. A distinct advantage of utilizing the basin 14 and the cutting board 62 is that it allows for both side-to-side and back-to-back movement of the cutting board with respect to the basin. This allows for varying access to the basin at the discretion of the operator.

While the cooking chamber 16 and its adjacent controls have been shown in conjunction with a sink basin as can be seen from Fig. 11, it can utilized without it and in conjunction with a cooking range. While the insulating ring 60 provides a safety feature, it could be eliminated and still have the advantages of the control feature. However, it is not recommended from a safety standpoint.

## Claims

1. A sink (12) and a cutting board member (62) combination, wherein the cutting board member (62) is supported by the sink (12) in a slidable side-to-side or slidable front-to-back manner, the sink (12) comprising:
a sink basin (14); and
first supporting surfaces (66, 67) and second supporting surfaces (68, 69) at first and
second levels with respect to the basin (14) and surrounding the basin (14); wherein the cutting board member (62) and the supporting surfaces (66, 67, 68, 69) being constructed and arranged to provide sliding movement of the cutting board member (62) in one of the side-to-side or front-to-back directions on the first supporting surfaces (66, 67) **characterised in that** when the cutting board member (62) is turned 90 degrees the supporting surfaces (66, 67, 68, 69) provide sliding movement of the cutting board member (62) in the other of the side-to-side or front-to-back directions on the second supporting surfaces (68, 69).

2. The sink as defined in claim 2, wherein the supporting surfaces are rails.

3. The sink as defined in claim 3, wherein the second supporting surfaces (68, 69) are lower than the first supporting surfaces (66, 67) and are constructed and arranged to support a kitchen utensil.

## Patentansprüche

1. Kombination aus Spüle (12) und einem Schneidbrettelement (62), wobei das Schneidbrettelement (62) von der Spüle (12) verschiebbar von einer Seite zu der anderen Seite oder von vorne nach hinten getragen wird, wobei die Spüle (12) folgendes umfasst:
ein Spülbecken (14); und
erste Trägeroberflächen (66, 67) und zweite Trägeroberflächen (68, 69) auf ersten und zweiten Ebenen im Verhältnis zu dem Becken (14) und das Becken (14) umgebend; wobei das Schneidbrettelement (62) und die Trägeroberflächen (66, 67, 68, 69) so gestaltet und angeordnet sind, dass sie eine Schiebebewegung des Schneidbrettelements (62) in Richtungen von einer Seite zu der anderen Seite oder von vorne nach hinten an den ersten Trägeroberflächen (66, 67) bereitstellen, **dadurch gekennzeichnet, dass** bei einer Drehung des Schneidbrettelements (62) um 90 Grad, die Trägeroberflächen (66, 67, 68, 69) eine Schiebebewegung des Schneidbrettelements (62) in die andere der Richtungen von einer Seite zu der anderen Seite oder von vorne nach hinten an den zweiten Trägeroberflächen (68, 69) bereitstellen.

2. Spüle nach Anspruch 1, wobei es sich bei den Trägeroberflächen um Schienen handelt.

3. Spüle nach Anspruch 2, wobei die zweiten Trägeroberflächen (68, 69) niedriger sind als die ersten Trägeroberflächen (66, 67) und so gestaltet und angeordnet sind, dass sie ein Küchengerät tragen.

## Revendications

1. Évier (12) et élément formant planche à découper (62) en combinaison, dans lequel l'élément formant planche à découper (62) est soutenu par l'évier (12) d'une manière coulissante de côté à côté ou coulissante d'avant en arrière, l'évier (12) comprenant :
une cuve d'évier (14) ; et
des premières surfaces d'appui (66, 67) et des secondes surfaces d'appui (68, 69) à des premier et second niveaux par rapport à la cuve (14) et entourant la cuve (14) ; dans lequel l'élément formant planche à découper (62) et les surfaces d'appui (66, 67, 68, 69) sont construits et agencés pour permettre un mouvement coulissant de l'élément formant planche à découper (62) dans un sens de côté vers côté ou dans un sens d'avant en arrière sur les premières surfaces d'appui (66, 67)
**caractérisé en ce que** lorsque l'élément formant planche à découper (62) est tourné de 90 degrés, les surfaces d'appui (66, 67, 68, 69) permettent un mouvement coulissant de l'élément formant planche à découper (62) dans l'autre du sens de côté vers côté ou d'avant en arrière sur les secondes surfaces d'appui (68, 69).

2. Évier selon la revendication 1, dans lequel les surfaces d'appui sont des rails.

3. Évier selon la revendication 2, dans lequel les secondes surfaces d'appui (68, 69) sont plus basses que les premières surfaces d'appui (66, 67) et sont construites et agencées pour supporter un ustensile de cuisine.
